# EUROPEAN PATENT APPLICATION

(11) **EP 1 276 207 A2**
(43) Date of publication of application: **15.01.2003**
(21) Application number: 02015369.8
(22) Date of filing: 10.07.2002
(51) Int. Cl.: H02K 3/52, H02K 15/095

(54) **Armature for revolving field electrical machine**

(30) Priority: 11.07.2001 JP 2001210278; 07.07.2002 US 64363 P
(71) Applicant: Kabushiki Kaisha Moric, Shuuchi-gun, Shizuoka-ken (JP)
(72) Inventor: Takano, Tadashi, Shuuchi-gun, Shizuoka-ken (JP); Ando, Susumu, Shuuchi-gun, Shizuoka-ken (JP)
(74) Representative: Leson, Thomas Johannes Alois, Dipl.-Ing.

(57) **Abstract**

A number of embodiments of rotating electrical machines and methods for winding them that provides a high space utilization and very effective winding with less likelihood of damage to the insulation of the wire of the winding during the winding process. The arrangement basically does not require the winding needle to be moved back and forth in the slot between the poles but rather employs insulating inserts that are positioned on the axial faces of the poles outside of the gaps for guiding the wire from one end to the other so as to provide the high space utilization. In addition several embodiments of protective arrangements are disclosed that protect the wound coils from damage by the winding needle even though it may project into the slot between the poles.

## Description

### Background of Invention

This invention relates to an armature for a revolving field electrical machine and more particularly to an improved armature construction that permits winding to a maximum density and a simplified winding method.

A coil winding and method of forming it which represents an improvement over conventional winding methods and the resulting coils has been proposed. This structure and the method of forming it is disclosed in co-pending application entitled "COIL STRUCTURE FOR REVOLVING FIELD ELECTRICAL MACHINE AND METHOD OF MANUFACTURING SAME" Serial Number 09/683764; filed February 12, 2001 and assigned to the assignee hereof.

In this improved structure and method, the winding needle from which the wire to be wound is dispensed does not travel to any significant extent into the slots between the magnetic pole teeth around which the wire is wound. In fact in some embodiments the winding needle never enters the slots. It is, however, advantageous to have the winding needle slightly inserted into a back face side of a collar provided at the ends of the pole teeth. However, it is desirable to prevent the wire drawn out of the tip of the needle from being damaged by the contact with a side face of the collar. In addition when the tip of the needle is slightly inserted into the slot, it may interfere with a coil winding that has been already wound in the slot so that there may arise a risk of damaging the winding or its insulation.

Therefore it is a principle object to provide an improved coil winding and method of forming it that permits at least partial entry of the winding needle into the slot between the teeth being wound without damaging the already wound coils or the needle.

### Summary of Invention

An armature for a rotating machine having a circular core of a magnetic material and a plurality of magnetic pole teeth extending radially from said circular core and terminating at terminal ends spaced from said circular core. Each of the magnetic pole teeth defining a core with an enlargement formed at the terminal end of the core. This defines slots formed between adjacent magnetic pole teeth. Each of the slots has a mouth formed between adjacent enlargements. An insulator extends at least along the side of the enlargements facing the circular core for protecting windings formed by a winding needle from damage by the winding needle.

### Brief Description of Drawings

FIG. 1 is a cross sectional view taken through a rotating electrical machine formed in accordance with one embodiment of the invention.

FIG. 2 is an end elevational view of the laminations of the magnetic core looking from one side.

FIG. 3 is a side elevational view of the core.

FIG. 4 is end elevational view of the core looking in the opposite direction from FIG. 2.

FIG. 5 is an end elevational view, in part similar to FIG. 2, but shows the construction with the insulator in place with one portion of the insulator shaded to show how the side of the insulator is configured to assist in the winding operation.

FIG. 6 is a side elevational view, in part similar to FIG. 3, but shows the core assembly with the insulator in place.

FIG. 7 is an end elevational view, in part similar to FIG. 4 looking in the opposite direction from FIG. 5 and showing one portion of the insulator shaded to show how the side of the insulator is tapered.

FIG. 8 is a cross sectional view of one of the poll teeth of this embodiment with the coil winding removed.

FIG. 9 is a partial end elevational view taken in the direction of the arrow 9 in FIG. 8.

FIG. 10 is a cross sectional view of the upper bobbin half taken along the same plane as FIG 8.

FIG. 11 is an end elevational view looking in same direction as FIG. 9.

FIGS. 12a - 12k are a series of cross sectional views taken at equal intervals along the length of FIG. 8 starting at the base of the pole tooth (left hand side) and ending at the tip (right hand side) thereof.

Figure 13 is a graphical view showing how the configuration of the circumference changing member affects the winding circumference.

FIG. 14 is a view, in part similar to FIG. 5, and shows how the winding needle is associated with the slots between the pole teeth during the winding operation.

FIG. 15 is a projected side elevational view showing the path the needle takes when winding one of the coil.

FIG. 16 is a side view looking in a direction perpendicular to FIG. 15 and showing the same paths of travel of the winding needle.

FIG. 17 is an enlarged, exploded perspective view of a portion of the insulator of the magnetic core arrangement in accordance with another embodiment of the invention.

FIG. 18 is a partial side elevational view, with portions broken away and shown in section, of the area between two adjacent pole teeth showing a first embodiment of insulating construction for protecting the wound coils from damage when the winding needle extends into the slot during the winding process.

FIG. 19 is a partial side elevational view, with portions broken away and shown in section, of the area between two adjacent pole teeth in part similar to FIG. 18 and showing a second embodiment.

FIG. 20 is a partial side elevational view, with portions broken away and shown in section, of the area between two adjacent pole teeth in part similar to FIGS. 18 and 19 and showing a third embodiment.

FIG. 21 is a partial side elevational view, with portions broken away and shown in section, of the area between two adjacent pole teeth in part similar to FIG. 18, 19 and 20 and showing a fourth embodiment.

FIG. 22 is a partial side elevational view, with portions broken away and shown in section, of the area between two adjacent pole teeth in part similar to FIG. 18, 19, 20 and 21 and showing a fifth embodiment.

FIG. 23 is a partial side elevational view, with portions broken away and shown in section, of the area between two adjacent pole teeth in part similar to FIG. 18, 19, 20, 21 and 22 and showing a sixth embodiment.

### Detailed Description

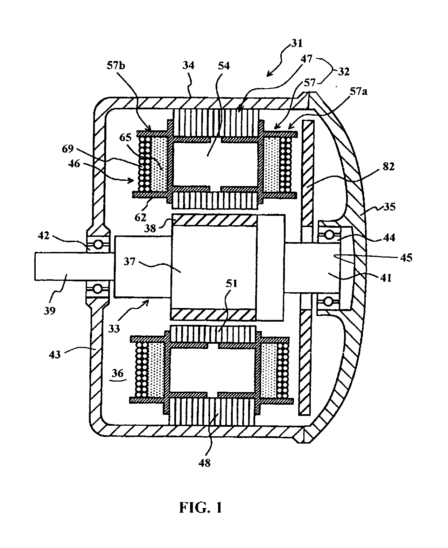

Referring now in detail to the drawings and initially to the construction shown in FIGS. 1 through 16, with primary reference first to FIG. 1, a rotating electric machine constructed in accordance with the invention is identified generally by the reference 31. The rotating electric machine 31 may be either an electric motor or a generator depending upon the desired application.

The rotating electrical machine 31 is comprised of a stator assembly, indicated generally by the reference numeral 32, and a rotor assembly, indicated generally by the reference numeral 33. These components are contained within a housing assembly that is comprised of a cup shaped, main housing piece 34 and a cover plate 35, which is suitably attached thereto to form an enclosure 36 in which the stator assembly 32 and rotor assembly 33 are positioned.

The rotor assembly 33 is formed with a central portion 37 on which a plurality of circumferentially spaced permanent magnets 38 having alternating polarity are affixed in a known manner. The end portions of the rotor assembly 33 comprise shaft portions 39 and 41 that are journalled, respectively, in bearings 42 carried by an integral closure wall 43 of the cup shaped, main housing piece 34 and bearings 44 carried in a recessed portion 45 of the cover plate 35.

The construction of the rotor assembly 33 may be deemed to be of the general conventional type and any type known in this art might be employed. Also, although the described machine employs an arrangement wherein a coil winding assembly, indicated generally by the reference numeral 46 is provided on individual armature poles, to be described, formed on the stator assembly 32, it should be understood that the coil winding assembly 46 can be mounted on the rotor assembly 33 and the permanent magnets 38 may be mounted as part of the stator assembly including the cup shaped, main housing piece 34.

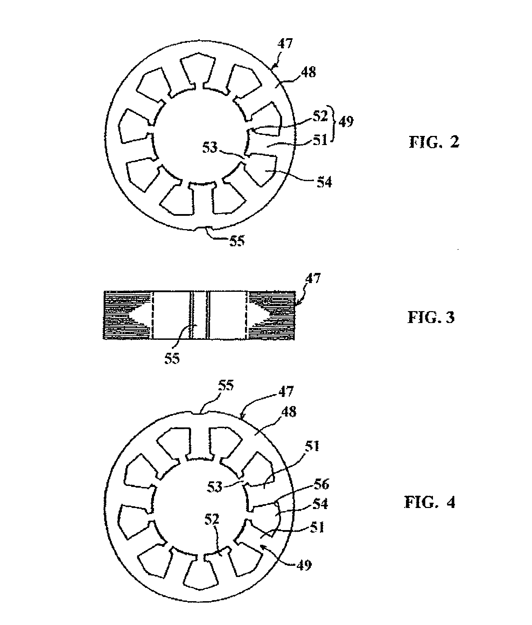

The stator assembly 32 is comprised of an armature core, indicated generally by the reference numeral 47, which is made up of a plurality of laminated armature plates as shown in FIGS. 2 through 4. In this embodiment, since the armature core 47 is the outer element of the rotating electric machine 31, it is comprised of a circular portion 48 from which a plurality of pole teeth, each indicated generally by the reference numeral 49, extend. The pole teeth 49 have generally rectangular portions 51 that extend outwardly from the circular portion 48 and which terminate in enlarged, projecting ends 52. Gaps 53 are formed between adjacent ends of these projecting ends 52, which form the outer termination of slots 54, formed between adjacent pole teeth 49.

In order to assist in the alignment of the lamination of the core pieces of the armature core 47, each of them is formed with a reference slot 55 on the outer periphery of their circular portion 48. This slot 55 assists in alignment as well as location within the cup shaped, main housing piece 34.

The ends of the slots 54 adjacent the circular portion 48 of the armature core 47 is defined by angularly disposed surfaces 56 formed on opposite sides of the bases of each of the pole teeth 49. These act as projections that cooperate with the projecting ends 52 at the outer ends of the teeth 49 so as to assist in locate an insulating bobbin forming members 57 around which the coil winding assembly 46 is formed as well as locating the individual windings themselves.

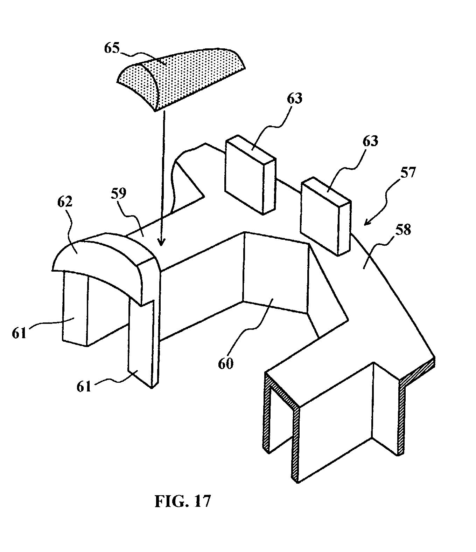

The insulating bobbin forming members 57 are comprised of right and left hand sections 57a and 57b, which have a substantially identical construction, except as will be hereinafter described. FIG. 17 is a view of another embodiment but shows the insulating bobbin forming member 57 of this embodiment in more detail.

Like the armature core 47, the insulating bobbin forming member 57 is comprised of a circular portion 58 that has an L-shaped cross section and from which extend individual legs 59 of a generally U-shape which is complimentary to and snuggly received on the core pole teeth 49. Inclined surfaces 60 at the base of these legs 59 cooperate with the aforenoted angularly disposed surfaces 56 formed at the outer ends of the pole teeth 49 so as to provide a stop or abutment against which the coil windings actually engage. This construction also facilitates alignment.

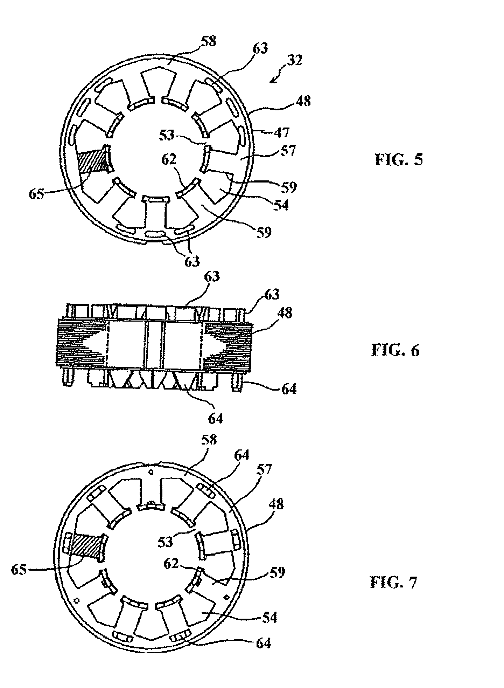

As may be seen in FIGS. 5 through 7, the outer periphery of the circular portion 58 of the insulating bobbin forming member 57 extends to a lesser circumferential extent than the outer periphery of the circular portion 48 of the armature core 47.

At the outer periphery of the insulator legs 59 and in the area between the slot gaps 53, the insulating bobbin forming member 57 have axially extending flange portions 61. These flange portions 61 are substantially co-extensive with the projecting ends 52 of the armature core portions 51. In addition, an arcuate portion 62 interconnects these axially extending flange portions 61 and extends axially outwardly so as to provide an abutment against which the coil winding assembly 46 will be confined as hereinafter noted.

Further projections, indicated at 63, are formed at circumferentially spaced locations around the periphery of the insulating bobbin forming member 57, at least one of which is aligned with the insulator leg portion 59 and another of which is positioned adjacent the intersection between the inclined surfaces 60 as best shown in FIG. 5. This construction is formed at one side of the insulator on one of the insulating bobbin forming member 57a or 57b. The spacing of these projections is chosen in order to facilitate the passage of wires connecting the individual coils of the coil winding assembly 46. On the other side, there are similar further projections, indicated at 64, which may form a similar purpose.

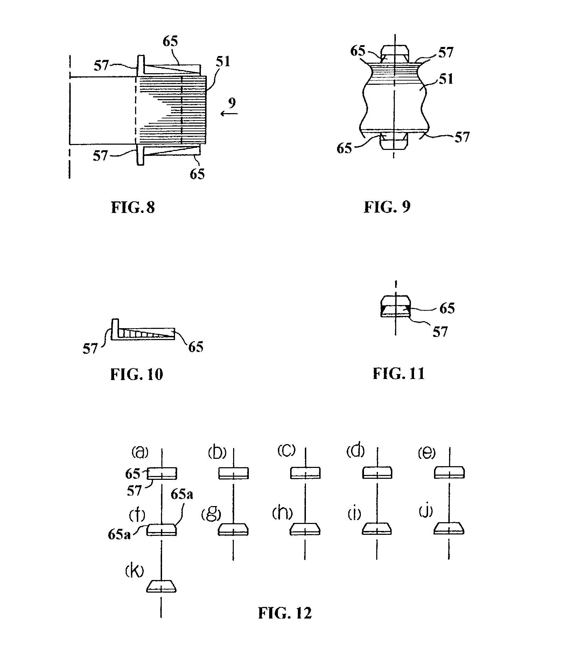

In accordance with an important feature of the invention, special insulator inserts indicated by the reference numeral 65 are placed on the faces of the insulator legs 59 on one or preferably both of the insulators in the area between the respective arcuate portions 62 and further projections 63 and 64 thereon. These insulators are shown in lines in FIGS. 6 and 8 so as to indicate their relationship to the respective insulating bobbin forming member 57a or 57b.

The shape of these insulator inserts 65 is chosen so that they act as circumference changing devices for a purpose that will be described now by reference to FIGS. 8-12. a circumference changing member 65 according to the invention is used in place of the before-mentioned taper members 65. The circumference changing member 65 may be a separate member from the insulating bobbin forming members 57 or a member molded integrally therewith.

As shown best in FIG.12, the circumference changing member 65 is chamfered as indicated at 65a at its opposite ends on the upper surface wherein the amount of this chamfering is gradually increasing from the positions of (a) through (k) toward the outer periphery. This gradually shortens the surface length of the circumference changing member 65 and accordingly the length or circumference around which each turn of the coil winding 46 makes progressing toward the tips of the pole teeth 51.

Gradually shortening the circumference in such manner allows a drawing support point of the winding that is drawn out of the needle to be disposed on the outer periphery side and allows the winding to easily slide outward when the winding is wound around the inner periphery side. Therefore, the needle winding action outside of the slot 54 (out of the inner periphery side in this example) or adjacent the inlet of the slot 54 without inserting the needle into the slot 54 allows the winding to be wound on the magnetic pole tooth 51 to the bottom side of the slot 54. In this case, as to the needle winding action, it is desirable to increase trail displacement of the loop to the extent of providing slack in the winding in order to carry out the winding action.

Thus, the drawing support point of the winding drawn out of the needle is located at the bottom of the slot to provide slack in the winding for the needle"s winding action, which enables the winding to smoothly slide down to form the coil 46 on the magnetic pole tooth 51 while keeping the height of the circumference changing member 65 constant.

However the upper surface of the circumference changing member 65 may be inclined downwardly toward the bottom side as with the before-mentioned taper members 65. Forming such an inclined surface also enables the winding to slide down to the bottom side as described before. However, forming such an inclined surface makes the height of the circumference changing member on the inlet side of the slot greater, resulting in a large protrusion of the coil ends, and therefore, a greater profile thereof in the radial direction, as aforenoted. With respect to this, keeping the height constant as in the example shown in FIGS. 8-12 enables to obtain a stator with a compact profile.

It should be noted that the further projections 63 and 64 need not be formed at the base of each of the pole teeth 49 because of the inclined surfaces 60 formed thereat which will tend to preclude the wire from slipping down along the incline below that point. However, the further projections 63 form a further purpose than stopping the wire coils from slipping down beyond this point as will become apparent.

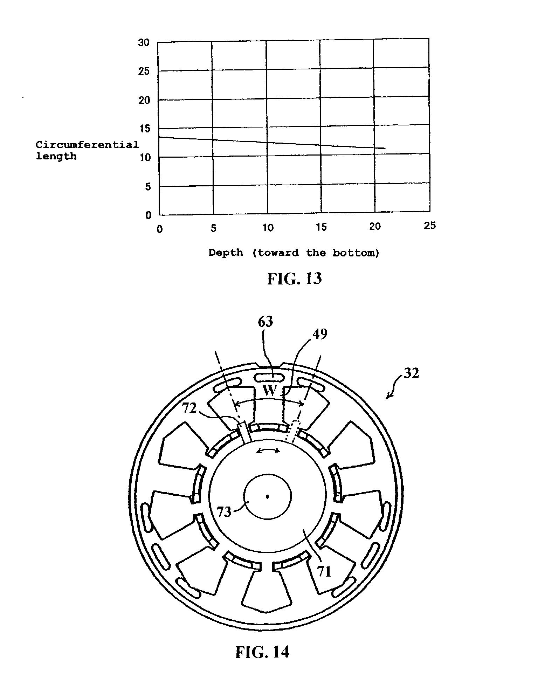

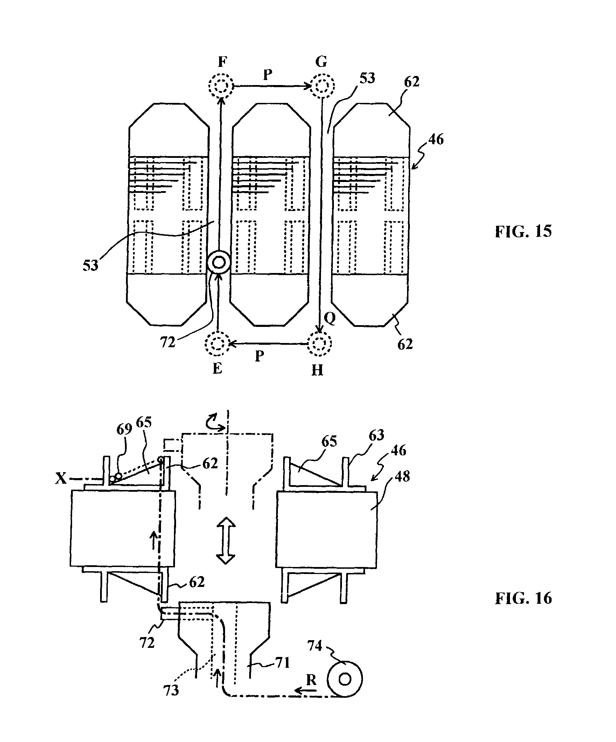

The method by which the winding is accomplished may be best understood and will now be described by reference primarily to FIGS. 14 through 16. The winding apparatus includes a needle carrier 71 that carries a winding needle 72 having a suitable configuration. The needle carrier 71 and needle 72 are formed with a wire guide opening 73 through which the individual enameled wire strand 69 passes from a feed roll 74. The path of wire travel is indicated by the arrows R in FIG. 16.

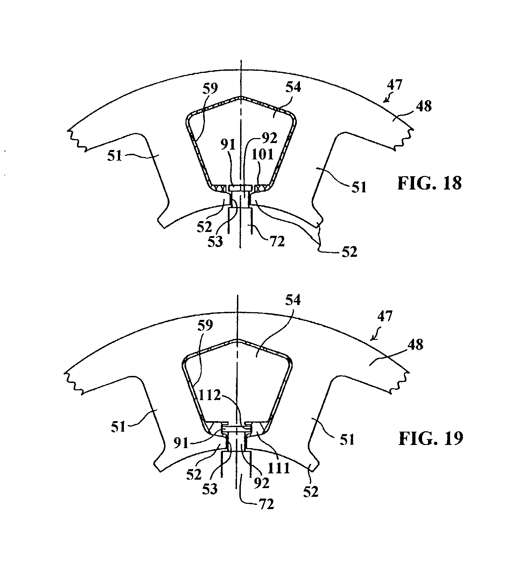

Initially, one end of the wire is clamped by a clamp at the position shown at X in FIG. 16, this being disposed radially outwardly beyond the end of the armature core 47 to form one end of one of the coil windings of the coil winding assembly 46. The needle is then moved radially along the tooth but in an area, which is disposed preferably slightly inwardly of the slots 54 between the teeth and on one axial side thereof as will be described in more detail later by reference to FIGS. 18-23. In this way, when the windings are formed, the bulging portion that overlies the wire end will not fill the slots 54 but will be positioned in an axial direction outwardly from these gaps and along one side face of the individual pole teeth 49.

The needle carrier 71 generally moves in a rectangular pattern around the individual pole teeth 49 and their overlying insulating bobbin forming members 57 as seen in FIG. 18. The winding needle 72 also rotates, as shown by the arrow in FIG. 17, through an arc W as it encircles the individual pole tooth 49. As will become apparent later, during winding, the needle 72 can either be radially positioned in the area immediately inside of the slot 54 in the area formed in the gaps 53 between the projecting ends 52 at the ends of the pole teeth 49, or radially inwardly of this area as long as during the winding operation the wire will contact the inner edge of the arcuate portion 62 of the insulating bobbin forming member 57.

As the wire is wound, it will be trapped by these edges and will engage the axially outermost portion of the insulator insert 65. Thus, as the needle traverses the path shown by the arrows P in FIG. 18, the wire strands 69 will be engaged with the axial outermost portions of the insulator insert 65. After traversing this area, then the needle 72 and needle carrier 71 is moved in the area indicated by the arrows Q in the radial direction between the adjacent pole teeth 49 and specifically the area of the slots 54.

As each winding is completed, the next winding will engage the previous winding and force it down the incline of the insulator insert 65 so that the wires will collect at the radial outer periphery of the slots 54. There the wire will be restrained by the inclined surfaces 60 of the insulating bobbin forming members 57.

Then, the next series of windings is made and is provided a very neat winding without bulges and which occupies substantially one half at the gap between the pole teeth 49 in the slots 54. This provides a very dense coil and insures maximum output of the machine.

In this case, the winding is drawn out of the tip of the needle 72 to the extent of providing slack in the winding to allow the trail movement of the loop of the tip of the needle 72 to be greater than the length of the coil turn. The drawing support point X of the winding is fixedly located at a point further outside than the bottom side end of the slot 54, thus to provide slack in the winding for its winding action, so that the winding is displaced in the direction of the drawing support point X through a lassoing action while the coil is wound on the magnetic pole tooth 51.

In this case, the needle is displaced such that the amount of slack becomes smaller continuously or in stages turn-by-turn to allow the winding to be sequentially wound toward the inside of the magnetic pole tooth 51 in order to allow the coil to be wound around the magnetic pole tooth from its root side.

Thus, the following methods to provide slack in the winding are employed;
(1) A method to increase displacement in the vertical direction.
(2) A method to increase displacement in the lateral direction (rotational direction).
(3) A method in which the needle is displaced in a radial direction between the positions where the needle is located outside of the opening face of the slot (See E, F, G or H in the FIG 15), and a method to combine these methods as appropriate.

Although only one needle carrier 71 and needle 72 is illustrated, preferably several can be provided at circumferentially spaced locations to speed up the winding process. For example there can be provided three of such assemblies, one for each winding phase. They can all be winding at the same time.

After the desired of the winding method has been performed, a controller assembly of any desired type 82 (FIG.1) is mounted on the further projections 64 of the insulating bobbin forming member 57a.

In the description thus far the insulators 65 have functioned as circumferential changing members to aid in the winding process without having the needle 72 move radially in the slots54. Rather than employing circumferential changing members, the insulators 65 may be tapered to assist the winding operation. A number of embodiments of such insulators are shown in the co-pending application entitled "STATOR COIL STRUCTURE FOR REVOLVING FIELD ELECTRICAL MACHINE AND METHOD OF MANUFACTURING SAME"; Serial Number 09/683764; filed February 12, 2002 and assigned to the assignee hereof. It will be understood that the invention herein described can be advantageously employed with any of those structures.

Only one such of those examples is shown here in FIG. 17 and further description thereof is not believed necessary for those skilled in the art to employ the inventions hereof with those earlier tapered insulator constructions.

As has been noted, it is desirable to position the tip of the needle 72 through the slot opening 53, but this can cause the tip of the needle 72 to engage the wound wire and damage its insulation. Next will be described several embodiments to prevent such damage, by reference to FIGS. 18-23. These figures are only partial views, as that is all that is believed necessary to permit those skilled in the art to practice this invention and the specific embodiments of it disclosed.

In each figure the needle tip is identified by the reference numeral 91 and this tip portion has a reduced diameter portion 92 spaced closely adjacent the tip end. With the prior art the bobbin 57 and specifically its leg portion 59 terminates at the base of the enlarged projecting end portion 52 of the pole teeth 51.

Referring first to the embodiment of FIG. 18, the bobbin leg portions 59 are formed with a collar like enlargement 101 that extends along the enlarged projecting end portion 52 of the pole teeth 51 and surrounds the tip portion 91 of the winding needle 72. This prevent the coil winding (not shown) wound on the magnetic pole tooth 51 from being interfered with by the tip 91of the needle 72.

FIG. 19 shows a second embodiment of the interference prevention arrangement. In this embodiment, A projecting collar 111 of the bobbin leg 59 has a groove 112 that receives the nozzle tip 91. The remainder of the collar closely surrounds the tip reduced diameter portion 92 and partially overlies the tip 91 in the area around the wire discharge opening.

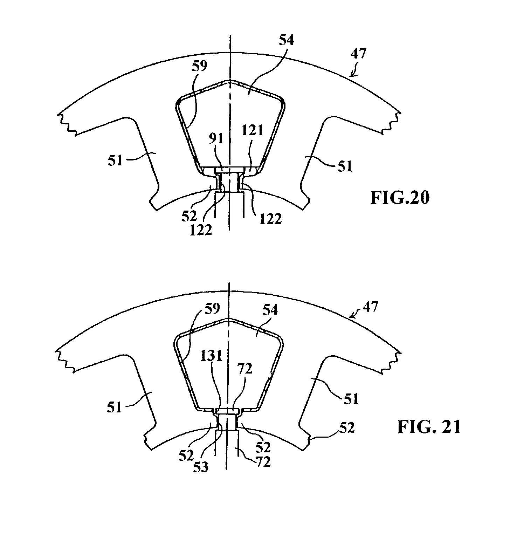

FIG. 20 shows a third embodiment of the interference prevention arrangement. In this embodiment a collar portion 121 surrounds the nozzle tip 91 and a further portion 122 thereof covers the face of the enlarged head portion 52 of the tooth 51 to offer further protection. Thus this embodiment not only prevents the coil windings from being interfered with by the tip 91 of the needle 72, but also prevents the tip of the needle and the enlarged head portion 52 of the tooth 51 from direct contact.

FIG. 21 shows a fourth embodiment of the interference prevention arrangement. In this embodiment, the enlarged head portion 52 of the tooth 51 facing the slot 54 is recessed at 131 to receive and cover a portion of the tip 91 of the nozzle 72. An extending portion 132 of the bobbin leg 59 surrounds the remaining a portion of the tip 91 of the nozzle 72.

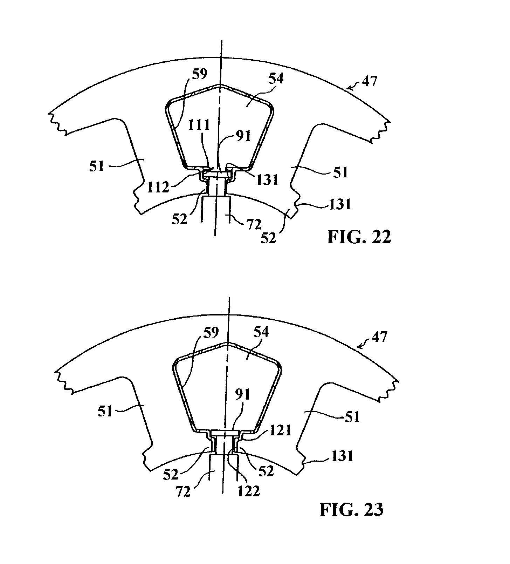

FIG. 22 shows a fifth embodiment of the interference prevention arrangement. This combines the features of the embodiments of FIGS. 19 and 21 and thus the reference numerals previously used identify like components in this embodiment.

FIG. 23 shows a sixth embodiment of the interference prevention arrangement. This combines the features of the embodiments of FIGS. 20 and 21 and thus the reference numerals previously used identify like components in this embodiment. In view of this it is believed that further description of this embodiment and its advantages is unnecessary.

Thus, from the foregoing description, it should be readily apparent that the described structures provide very dense coil windings and afford very rapid winding methods at a relatively low cost as compared to the prior art constructions and methods. In addition the likelihood of damaging the already wound wires by contact with the winding nozzle is substantially eliminated Of course, the foregoing description is that of preferred embodiments of the invention and various changes and modifications in addition to those mentioned may be made without departing from the spirit and scope of the invention, as defined by the appended claims.

A number of embodiments of rotating electrical machines and methods for winding them that provides a high space utilization and very effective winding with less likelihood of damage to the insulation of the wire of the winding during the winding process. The arrangement basically does not require the winding needle to be moved back and forth in the slot between the poles but rather employs insulating inserts that are positioned on the axial faces of the poles outside of the gaps for guiding the wire from one end to the other so as to provide the high space utilization. In addition several embodiments of protective arrangements are disclosed that protect the wound coils from damage by the winding needle even though it may project into the slot between the poles.

## Claims

1. An armature for a rotating machine having a circular core of a magnetic material and a plurality of magnetic pole teeth extending radially from said circular core and terminating at terminal ends spaced from said circular core, each of said magnetic pole teeth defining a core and an enlargement formed at the terminal end of said core, to define slots formed between adjacent magnetic pole teeth, each of said slots having a mouth formed between adjacent enlargements, and an insulator extending at least along the side of said enlargements facing said circular core for protecting windings formed by a winding needle from damage by the winding needle.

2. An armature for a rotating machine as set forth in claim 1, wherein the pole teeth are at least partially covered by an insulating bobbin around which the winding needle places the windings.

3. An armature for a rotating machine as set forth in claim 2, wherein the insulating bobbin has leg portions that extend for the length of the pole teeth at least on the sides of the slots.

4. An armature for a rotating machine as set forth in claim 3, wherein the insulators have a greater thickness than the insulating bobbin leg portions.

5. An armature for a rotating machine as set forth in claim 3, wherein the insulators define a slot that receives the winding nozzle tip.

6. An armature for a rotating machine as set forth in claim 5, wherein the slot is formed between portions of the insulator that define an opening smaller than the diameter of the received winding nozzle tip.

7. An armature for a rotating machine as set forth in claim 3, wherein the insulator is carried by the bobbin leg portions.

8. An armature for a rotating machine as set forth in claim 7, wherein the insulators have a greater thickness than the insulating bobbin leg portions.

9. An armature for a rotating machine as set forth in claim 7, wherein the insulators define a slot that receives the winding nozzle tip.

10. An armature for a rotating machine as set forth in claim 9, wherein the slot is formed between portions of the insulator that define an opening smaller than the diameter of the received winding nozzle tip.

11. An armature for a rotating machine as set forth in claim 4, wherein the insulator is integrally formed with the bobbin leg portions.

12. An armature for a rotating machine as set forth in claim 11wherein the insulators have a greater thickness than the insulating bobbin leg portions.

13. An armature for a rotating machine as set forth in claim 11 herein the insulators define a slot that receives the winding nozzle tip.

14. An armature for a rotating machine as set forth in claim 13 herein the slot is formed between portions of the insulator that define an opening smaller than the diameter of the received winding nozzle tip.
